# EUROPEAN PATENT SPECIFICATION

(11) **EP 4 357 865 B1**
(45) Date of publication and mention of the grant of the patent: **17.06.2026**
(21) Application number: 23193175.9
(22) Date of filing: 24.08.2023
(51) Int. Cl.: G05B 23/02, G06N 20/00

(54) **ANOMALY SIGN DETECTION SYSTEM, ANOMALY SIGN DETECTION MODEL GENERATION METHOD, AND ANOMALY SIGN DETECTION MODEL GENERATION PROGRAM**
ANOMALIEZEICHENERKENNUNGSSYSTEM, ANOMALIEZEICHENERKENNUNGSMODELLERZEUGUNGSVERFAHREN UND ANOMALIEZEICHENERKENNUNGSMODELLERZEUGUNGSPROGRAMM
SYSTÈME DE DÉTECTION DE SIGNE D'ANOMALIE, PROCÉDÉ DE GÉNÉRATION DE MODÈLE DE DÉTECTION DE SIGNE D'ANOMALIE ET PROGRAMME DE GÉNÉRATION DE MODÈLE DE DÉTECTION DE SIGNE D'ANOMALIE

(30) Priority: 19.10.2022 JP 2022167350
(43) Date of publication of application: 24.04.2024
(73) Proprietor: KABUSHIKI KAISHA TOSHIBA, Kawasaki-shi, Kanagawa 212-0013 (JP); Toshiba Energy Systems & Solutions Corporation, Saiwai-ku Kawasaki-shi Kanagawa (JP)
(72) Inventor: TAKADO, Naoyuki, Kawasaki-shi, Kanagawa (JP); MIYAMOTO, Chikashi, Tokyo (JP); AOKI, Toshio, Tokyo (JP); TOMINAGA, Shinya, Kawasaki-shi, Kanagawa (JP); MIYAKE, Ryota, Kawasaki-shi, Kanagawa (JP)
(74) Representative: Hoffmann Eitle

(56) References cited:
- US-A1- 2012 041 575
- US-A1- 2020 386 656

## Description

### TECHNICAL FIELD

Embodiments of the present invention relate to an anomaly sign detection technique.

### BACKGROUND

In recent years, practical application of anomaly sign detection for plant apparatuses with the use of artificial intelligence (AI) is progressing. There are two main methods for detecting a sign of an anomaly.

For example, in a known supervised learning, when an abnormal state can be identified, this abnormal state is defined as an index or teacher. In the case where the target for anomaly detection contains data matching the state defined as the index, this case is detected as an anomaly sign in this supervised learning.

Since a wide variety of abnormal states are possible, an unsupervised learning that does not use an abnormal state as an index or teacher is known. In this unsupervised learning, when an abnormal state cannot be clearly identified in advance, data that cannot be explained from the AI-learned data, such as data being different from the learning data, are detected as an anomaly sign.

In the case of the unsupervised learning, when the amount of data for a normal state to be learned by AI is insufficient, a state that should be actually treated as normal is also identified as abnormal. However, in general, there are not many data to be learned. For this reason, so-called data augmentation, i.e., a technique for augmenting data by changing the existing data has been developed mainly in the field of diagnostic imaging.

In general, the data augmentation methods to be performed in the field of diagnostic imaging include: adding a noise component to image data; rotating/reversing the image data; stretching/compressing the image data; and converting the frequency component (phase/amplitude) of the image data.

In fields excluding diagnostic imaging, methods have been proposed to reproduce data by changing the phase of the frequency component for the purpose of complementing the timing of acquiring discrete time-series data, i.e., complementing the sampling interval.

As the anomaly sign detection for time-series data, for example, when an anomaly sign detection technique using AI is applied to data acquired from a power plant, there are an infinite number of abnormal states, and thus, it is not possible to identify all the abnormal states in advance. For this reason, the unsupervised learning is applied to the data acquired from a power plant.

However, a normal state that the time-series data to be used as the learning data (i.e., training data) can take varies depending on various conditions, and can take an infinite number of states, so it is practically extremely difficult to acquire all the actual data.

For example, conditions resulting from seasonal variations in outside air temperature and seawater temperature never take the same value. The plant output is changed such that the seasonal variations are reflected or superimposed on the plant output. In this manner, the timing of being brought into a transitional state also varies.

In addition, there are cases where the plant is operated by changing its output on the basis of change in the main operating state, for example, power system requirements and external constraint conditions.

Although there are countless operational patterns of redundant apparatuses such as a combination of operation of these apparatuses, respective data related to each of these apparatuses are completely different from each other.

In addition, when a new sensor is installed in the existing facility, it means addition of new data, and the data to be monitored in terms of correlation between a plurality of process values may change before and after the addition of this sensor.

Accordingly, even if a facility is in a normal operating state, due to insufficient learning, there is a possibility that this normal operating state is recognized as abnormal data so as to be unnecessarily detected as an anomaly sign. If the data are missing beyond shortage of data, as exemplified by a case where new data are added, the new data cannot be treated as the target of the anomaly sign detection.

It is conceivable to augment data in order to deal with such problems. Although adding a noise component to time-series data and changing a frequency component in time-series data as in the conventional technique are worth using for data augmentation, other methods cannot be applied. For example, in the case of both the outside air temperature and the seawater temperature, it does not mean that both parameters can take any value, and both parameters change within a certain range and in a certain period of time. Consequently, normal data cannot be augmented by adding a noise component or changing a frequency component.

Thus, even in the case of augmenting data by using the conventional technique, many abnormalities are unnecessarily detected. Hence, when an anomaly is detected, it causes an unnecessary workload to identify the anomaly for the worker who respond to the anomaly detection. Further, when a true anomaly is mixed in a large number of anomaly detections, there is a possibility of oversight and omission in response, which lowers the reliability of the anomaly sign detection function. Moreover, the anomaly sign detection cannot be performed on the data that are not included in the learning data.

Document US 2020/386656 A1 relates to a system for detecting anomaly for high-dimensional sensor data associated with one or more machines. During operation, the system can obtain sensor data from a set of sensor associated with one or machines, apply data exploration techniques on the sensor data to automatically process sensor data to identify a subset of feature sensors from the available set of feature sensors, apply an unsupervised machine-learning technique to the identified subset of feature sensors and the target sensor to learn a set of pair-wise univariate models, and determine whether and how an anomaly occurs in the operation of the one or more machines based on the set of pair-wise univariate models.

In view of the above-described circumstances, an object of embodiments of the present invention is to provide an anomaly sign detection technique that can suppress false positive and improve reliability of an anomaly sign detection function.

### BRIEF DESCRIPTION OF THE DRAWINGS

In the accompanying drawings:
Fig. 1 is a block diagram illustrating a configuration of an anomaly sign detection system according to the first embodiment;
Fig. 2 is a block diagram illustrating a preprocessing unit according to the first embodiment;
Fig. 3 is a graph illustrating an aspect of calculating one corrected process value from an actual process value;
Fig. 4 is a graph illustrating an aspect of calculating a plurality of corrected process values from actual process values;
Fig. 5 is a block diagram illustrating the anomaly sign detection system according to the second embodiment;
Fig. 6 is a block diagram illustrating the preprocessing unit according to the second embodiment;
Fig. 7 is a block diagram illustrating a setting reception unit according to the second embodiment;
Fig. 8 is a configuration diagram illustrating a system provided with redundant apparatuses;
Fig. 9 is a graph illustrating an aspect of calculating a corrected process value of the redundant apparatuses;
Fig. 10 is a block diagram illustrating the anomaly sign detection system according to the third embodiment;
Fig. 11 is a block diagram illustrating the preprocessing part according to the third embodiment; and
Fig. 12 is a graph illustrating an aspect of calculating the corrected process value from additional learning data.

### DETAILED DESCRIPTION

The present invention is set forth and characterized in the independent claims, while the dependent claims describe other characteristics of the invention.

According to embodiments of the present invention, it is possible to provide an anomaly sign detection technique that can suppress false positive and improve reliability of an anomaly sign detection function.

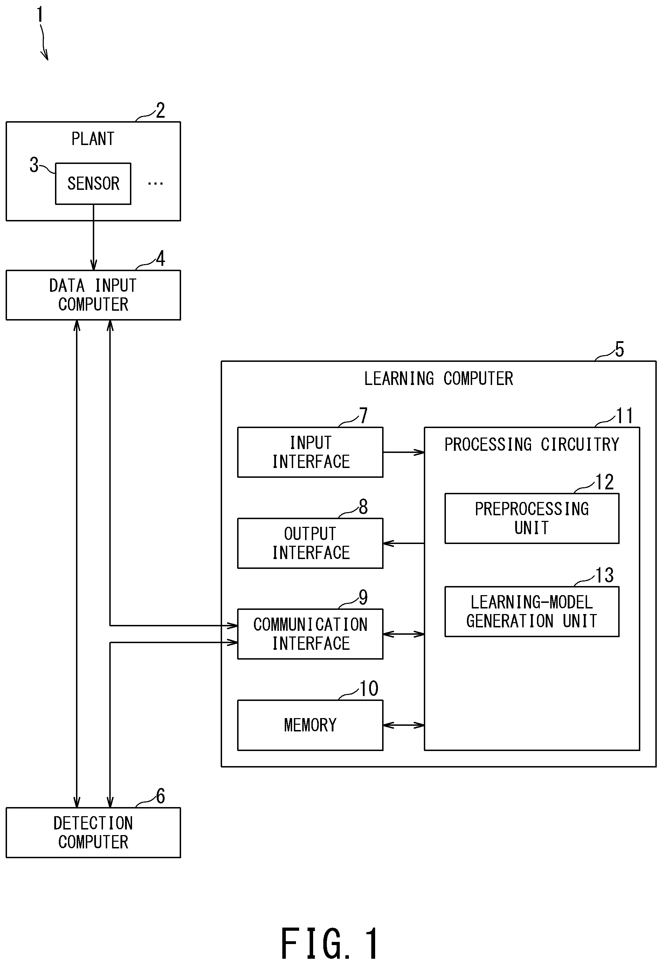

[FIRST EMBODIMENT] Hereinbelow, a description will be given of respective embodiments of an anomaly sign detection system, an anomaly sign detection model generation method, and an anomaly sign detection model generation program in detail by referring to the accompanying drawings. First, the first embodiment will be described by using Fig. 1 to Fig. 4.

The reference sign 1 in Fig. 1 denotes an anomaly sign detection system according to the first embodiment. This anomaly sign detection system 1 uses (i.e., receives) data obtained from a target facility as input data so as to detect an anomaly or a sign of an anomaly in the target facility. The target facility to be monitored is, for example, a nuclear power plant, a thermal power plant, a manufactory, and a production facility. As the target facility of the present embodiment, such a plant 2 is illustrated.

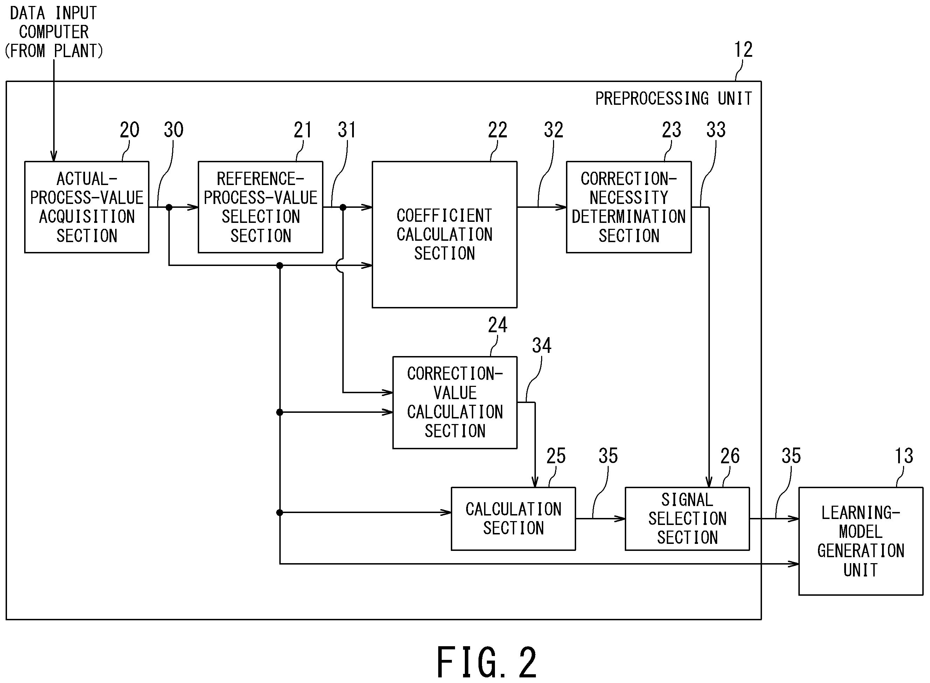

In addition, the plant 2 is provided with a large number of sensors 3. These sensors 3 are, for example, predetermined measuring instruments attached to predetermined apparatuses such as piping, pumps, and valves. Further, the sensors 3 acquire measurement values (i.e., actually measured values) that include information items indicative of the respective states of these apparatuses. The large number of measured values to be obtained from these sensors 3 are referred to as monitoring target data. Further, each converted measurement value in a format capable of being processed by machine learning is referred to as an actual process value 30 (Fig. 2). Note that the actual process values 30 include: a control signal to be outputted from a controller for controlling the apparatuses; and values such as opening degree of each valve.

In the anomaly sign detection technique, an anomaly or its sign is detected by detecting a slight change in at least one of the actual process values 30. In order to achieve this detection, it is necessary to determine the normal state of the plant 2 with high accuracy. Incorrect determination causes false positive, which leads to unnecessary work for a plant operator.

The number of the actual process values 30 to be acquired in the plant 2 is enormous. Thus, in the present embodiment, artificial intelligence (AI) to be achieved by machine learning is used to determine an anomaly or its sign from the enormous number of actual process values 30.

For example, a learning model generated by machine learning using a neural network, a learning model generated by other machine learning, a deep learning algorithm, or a mathematical algorithm such as regression analysis can be used. In addition, forms of the machine learning include forms such as clustering and deep learning.

The anomaly sign detection system 1 may be configured by a single computer that includes the neural network or the anomaly sign detection system 1 may be configured by a plurality of computers including the neural network.

The neural network is a mathematical model that expresses the characteristics of brain functions by computer simulation. For example, artificial neurons (nodes) that form a network through synaptic connections change the synaptic connection strength through learning and show a model that has acquired problem-solving ability. Furthermore, the neural network acquires problem-solving ability by the deep learning.

For example, the neural network is provided with intermediate layer composed of multiple layers. Each layer of the intermediate layer is composed of, for example, multiple units. In addition, feature amount in a pattern of change in state of a circuit or a system can be automatically extracted by causing the multilayer neural network to learn in advance with the use of learning data (training data). On the user interface, the multilayer neural network can set arbitrary number of the intermediate layer, arbitrary number of units, arbitrary learning rate, arbitrary number of times of learning, and arbitrary activation function.

In the present embodiment, a description will be given of an anomaly sign detection technique in which an autoencoder (encoder-decoder network) is used. The learning model of the present embodiment is achieved by this autoencoder. Note that other algorithm except the autoencoder may be applied to the machine learning of the present embodiment.

During the machine learning, there occurs spurious correlation in which the trend of change in time series accidentally resemble each other between the plurality of actual process values 30 despite non-existence of physical correlation between these actual process values 30. If AI learns the spurious correlation, it becomes a factor of causing false positive. However, in the present embodiment, learning of the spurious correlation is avoided and thereby an anomaly sign of the plant 2 is detected with high accuracy.

As shown in Fig. 1, the anomaly sign detection system 1 includes: a data input computer 4; a learning computer 5; and a detection computer 6. These include hardware resources such as a Central Processing Unit (CPU), a Read Only Memory (ROM), a Random Access Memory (RAM) and/or a Hard Disk Drive (HDD) are configured as computers in which information processing by software is achieved with the use of the hardware resources by causing the CPU to execute various programs. Further, the anomaly sign detection model generation method of the present embodiment is achieved by causing the computers to execute the various programs.

The data input computer 4 collects the monitoring target data that are a large number of measured values obtained by the sensors 3 installed in the plant 2. This data input computer 4 is a server for storing the monitoring target data, for example. The collected monitoring target data are sent to the learning computer 5 or the detection computer 6.

The learning computer 5 generates an anomaly sign detection model that detects at least one of: an anomaly of the plant 2; and a sign of an anomaly of the plant 2. The generated anomaly sign detection model is sent to the detection computer 6.

The detection computer 6 uses the anomaly sign detection model to detect at least one of: the anomaly of the plant 2; and its sign.

Although the respective components of the anomaly sign detection system 1 are installed in the individual computers, these components do not necessarily need to be achieved by a plurality of computers. For example, one computer may integrally achieve the respective components of the anomaly sign detection system 1.

The learning computer 5 includes: an input interface 7; an output interface 8; a communication interface 9; a memory 10; and processing circuitry 11. Note that the learning computer 5 does not have to include the input interface 7, the output interface 8, and the memory 10.

Predetermined information is inputted to the input interface 7 in response to an operation by a user who uses the learning computer 5. The input interface 7 includes an input device such as a mouse and a keyboard. That is, the predetermined information is inputted to the input interface 7 depending on the operation on these input devices.

The output interface 8 outputs the predetermined information. The learning computer 5 includes a device that displays an image such as a display that outputs analysis results. This output interface 8 controls images to be displayed on the display. The display may be separated from the main body of the computer or may be integrated with the main body of the computer.

The communication interface 9 communicates with the data input computer 4 or the detection computer 6 via a predetermined communication line. In the first embodiment, the data input computer 4, the learning computer 5, and the detection computer 6 are connected to each other via a LAN (Local Area Network). The data input computer 4, the learning computer 5, and the detection computer 6 may be connected to each other via the Internet, a WAN (Wide Area Network), or a mobile communication network. In addition, each of these computers 4 to 6 may be interconnected via a bus.

The memory 10 stores various information items that are necessary for generating the anomaly sign detection model. For example, the memory 10 stores the actual process values 30 sent from the data input computer 4.

The processing circuitry 11 of the present embodiment is, for example, a circuit provided with a Central Processing Unit (CPU), a Graphics Processing Unit (GPU) and/or a special-purpose or general-purpose processor. The processor implements various functions by executing programs stored in the memory 10. The processing circuitry 11 may be configured of hardware such as a field programmable gate array (FPGA) and an application specific integrated circuit (ASIC). The various functions can also be implemented by such hardware. Additionally, the processing circuitry 11 can implement the various functions by combining hardware processing and software processing based on its processor and programs.

The processing circuitry 11 of the first embodiment includes a preprocessing unit 12 and a learning-model generation unit 13, both of which are achieved by causing the CPU to execute the programs stored in the memory or the HDD.

The preprocessing unit 12 preprocesses the learning input data (i.e., inputted signal) inputted to the neural network. For example, the learning input data are generated on the basis of the plurality of actual process values 30 generated in the plant 2. In the preprocessing, correction of at least one of the plurality of actual process values 30 is executed.

This preprocessing unit 12 includes: an actual-process-value acquisition section 20; a reference-process-value selection section 21; a coefficient calculation section 22; a correction-necessity determination section 23; a correction-value calculation section 24; a calculation section 25; and a signal selection section 26 (Fig. 2). The learning input data generated in the preprocessing unit 12 are inputted to the learning-model generation unit 13.

Although each component of the preprocessing unit 12 is described one by one as a minimum form, each component of the preprocessing unit may exist in plural number. The functions of the preprocessing unit 12 may include a function to interpolate missing data in the time series data generated in the plant 2.

The learning-model generation unit 13 performs the machine learning by inputting the learning input data generated by the preprocessing unit 12 to the anomaly sign detection model. The anomaly sign detection model generated by the learning-model generation unit 13 is set to the detection computer 6.

The detection computer 6 performs the anomaly sign detection by using the autoencoder. For example, the detection computer 6 acquires the monitoring target data sent from the data input computer 4. The detection computer 6 inputs the plurality of actual process values 30 converted from the monitoring target data as the determination input data to an input layer of the learned anomaly sign detection model. The detection computer 6 acquires determination output data, which are outputted from an output layer of the anomaly sign detection model in response to the input of the determination input data. The determination output data are data in which the respective normal states of the plurality of actual process values 30 are restored. The detection computer 6 determines presence/absence of at least one of an anomaly or a sign of an anomaly in the plant 2 on the basis of the difference between the determination input data and the determination output data. In the present embodiment, even in the case of performing the anomaly sign detection by using the autoencoder under the condition where the learning data cannot be sufficiently acquired, the detection accuracy can be improved by suppressing false positive.

This anomaly sign detection model includes the input layer, the intermediate layer, and the output layer. The input layer receives the learning input data or the determination input data. The output layer outputs the determination output data in response to the input of the determination input data. In the intermediate layer, the parameters are machine-learned by the learning input data. The detection computer 6 to use the difference between the determination input data and the determination output data for determining presence/absence of at least one of an anomaly or a sign of an anomaly in the plant 2. This determine function is provided to the detection computer 6 by the anomaly sign detection model.

Next, a description will be given of the flow of the processing up to the generation of the learning input data to be executed by the anomaly sign detection system 1 by referring to Fig. 1 and Fig. 2.

The arrows in Fig. 2 are one possible interpretation indicative of the flow of processing to be executed by the preprocessing unit 12, and there may be another flow of processing except the illustrated arrows. The anteroposterior relationship of the respective processes or components in Fig. 2 is not necessarily fixed but may be exchanged partially. One or more processes in Fig. 2 may be executed in parallel with another process. Furthermore, the anomaly sign detection system 1 may include components other than the configuration shown in Fig. 2, and at least one component shown in Fig. 2 may be omitted.

As shown in Fig. 1, first, the respective sensors 3 provided in the plant 2 acquire respective measured values generated in this plant 2. The measured values acquired by these sensors 3 are collected in the data input computer 4 and are sent as the monitoring target data to the learning computer 5.

As shown in Fig. 2, in the preprocessing unit 12 of the learning computer 5, the actual-process-value acquisition section 20 acquires the monitoring target data from the data input computer 4.

The monitoring target data are time-series data and may be either analog data or digital data. The actual-process-value acquisition section 20 converts the monitoring target data into digital data that can be inputted to the learning-model generation unit 13, i.e., into the actual process values 30.

For example, the actual-process-value acquisition section 20 associates each of the plurality of measured values included in the monitoring target data with the sensor management number and the sensor name, and outputs the measured values subjected to this association processing as the actual process values 30. In other words, the actual-process-value acquisition section 20 converts each of the plurality of measured values related to the plant 2 into a format to be used for the machine learning of the anomaly sign detection model.

These actual process values 30 are used for a plurality of purposes. For example, these actual process values 30 are inputted to the reference-process-value selection section 21, the correction-value calculation section 24, and the calculation section 25, and are also inputted to the learning-model generation unit 13.

The reference-process-value selection section 21 selects at least one reference process value 31 as a reference for data correction from among the plurality of actual process values 30. The selected reference process value (s) 31 is/are inputted to the coefficient calculation section 22 and the correction-value calculation section 24.

According to the invention, the reference process value 31 to be selected has correlation with one or more other actual process value (s) 30. In the case of automatically determining whether correction is necessary or not, the actual process value 30 having correlation with the largest number of other actual process values 30 is selected as the reference process value 31 (i.e., the reference process value 31 to be selected from among the plurality of actual process values 30 is the actual process value 30 for which correlation is established with the largest number of other actual process values 30). For example, in the plant 2 having a turbine generator, in some cases, a monitoring target is a water-supply and condensate system configured to: return steam for power generation to water by cooling it; and supply this water to the heat-source side again. In this case, of the plurality of actual process values 30 in the water-supply and condensate system, each of the turbine generator output and the seawater temperature has correlation with the largest number of other actual process values 30. Note that the reference process value 31 can be set individually for each actual process value 30. In addition, the same reference process value 31 can be set for the plurality of actual process values 30.

The coefficient calculation section 22 uses at least one actual process value 30 from among the plurality of actual process values, and the reference process value 31 to calculate a correction-necessity coefficient of determination 32 for determining whether the at least one actual process value 30 is correlated with the reference process value 31 or not. The calculated correction-necessity coefficient of determination 32 is inputted to the correction-necessity determination section 23.

It is not permissible or acceptable to correct all the actual process values 30. It is required to correct only the actual process value(s) 30 that is/are correlated with the reference process value 31. Thus, the coefficient calculation section 22 calculates the correction-necessity coefficient of determination 32 in order to determine necessity of correction for each of the actual process values 30. Note that the plurality of actual process values 30 may be used for calculating the correction-necessity coefficient of determination 32.

As a method of calculating the correction-necessity coefficient of determination 32, there is a method of using a coefficient of determination. In this manner, the correction-necessity coefficient of determination 32 can be calculated as a statistically appropriate value.

For each of the actual process values 30, the correction-necessity determination section 23 determines whether it is correlated with the reference process value 31 or not, on the basis of the correction-necessity coefficient of determination 32. When it is determined that correction is necessary, a correction determination flag 33 indicative of this determination result is set. The correction determination flag 33 having been set in this manner is inputted to the signal selection section 26.

As the determination method, there is a method of previously or preliminarily setting an arbitrary threshold for the correction-necessity coefficient of determination 32. For example, when the correction-necessity coefficient of determination 32 is equal to or larger than the threshold, it is determined that the actual process value 30 needs to be corrected.

Such a determination method, for example, the threshold to be used for the determination does not need to be uniquely set but may be changed depending on the reference process value 31. For example, in the plant 2 provided with the turbine generator, when the seawater temperature is selected as the reference process value 31, the vacuum degree of the steam condenser is linked to the seawater temperature. From this fact, the correction-necessity coefficient of determination 32 for this vacuum degree is set as a larger value, and consequently, it is determined that correction of the actual process value 30 regarding this vacuum degree is necessary. In contrast, the steam temperature to be inputted to the turbine generator is not linked to the seawater temperature. From this fact, the correction-necessity coefficient of determination 32 for the steam temperature is set as a smaller value, and consequently, it is determined that correction of the actual process value 30 regarding the steam temperature is not necessary.

The correction-value calculation section 24 uses at least one actual process value 30 and the reference process value 31 to calculate a correction value 34 that is for correcting the at least one actual process value 30. The calculated correction value 34 is inputted to the calculation section 25.

As a method of calculating the correction value 34, there is a method of calculating it on the basis of a linear regression coefficient of at least one actual process value 30 and at least one reference process value 31. Note that a plurality of actual process values 30 may be used for calculating the correction value 34.

For example, under the case where the seawater temperature is selected as the reference process value 31 in the plant 2 provided with the turbine generator, it is assumed that the vacuum degree of the steam condenser varies in association with the fluctuation of the seawater temperature and falls within a predetermined variation range. This variation range of the vacuum degree of the steam condenser is obtained, and the correction value 34 of the vacuum degree of the steam condenser is obtained on the basis of the seasonal fluctuation range of the seawater temperature. For example, it is assumed that the vacuum degree of the steam condenser changes by 1 mmHg when the seawater temperature changes by 1°C. In this case, when the seasonal fluctuation range of the seawater temperature is ±5°C, the correction value 34 for the vacuum degree of the steam condenser is ±5 mmHg.

The calculation section 25 uses the correction value 34 for correcting at least one actual process value 30 determined to be correlated with the reference process value 31 so as to calculate a corrected process value 35. The calculated corrected process value 35 is inputted to the signal selection section 26.

For example, four arithmetic operation can be used as a calculation method for correcting the actual process value 30. Aside from the four arithmetic operation, an arithmetic method in which a function of the correction value 34 and the actual process value 30 is calculated may be applied to the calculation method for correcting the actual process value 30.

The correction value 34 is calculated by using the linear regression coefficient, and the corrected process value 35 is generated by subjecting the correction value 34 to arithmetic addition, subtraction, arithmetic multiplication, or division. In this manner, the correction value 34 can be calculated as a value close to the actual operational state, and the corrected process value 35 close to the actual operation can be generated.

The signal selection section 26 generates the learning input data including at least one corrected process value 35 that is corrected by using the correction value 34.

For example, the signal selection section 26 selects whether or not to output a signal containing the information of the actual process value 30 to which the correction determination flag 33 is set (i.e., signal containing the information of the corrected process value 35). The signal containing this information of the corrected process value 35 is outputted from the signal selection section 26, and is added to the signal that contains the information of the actual process value 30 and is outputted from the actual-process-value acquisition section 20. The learning input data including these corrected process value 35 and actual process value 30 are inputted to the learning-model generation unit 13.

When there is no need for correction, i.e., when the signal contains the information of the actual process value 30 to which the correction determination flag 33 is not set, this signal is directly inputted to the learning-model generation unit 13.

In this manner, when the learning input data are inputted from the preprocessing unit 12 to the learning-model generation unit 13, the learning-model generation unit 13 inputs the learning input data to the anomaly sign detection model so as to perform the machine learning.

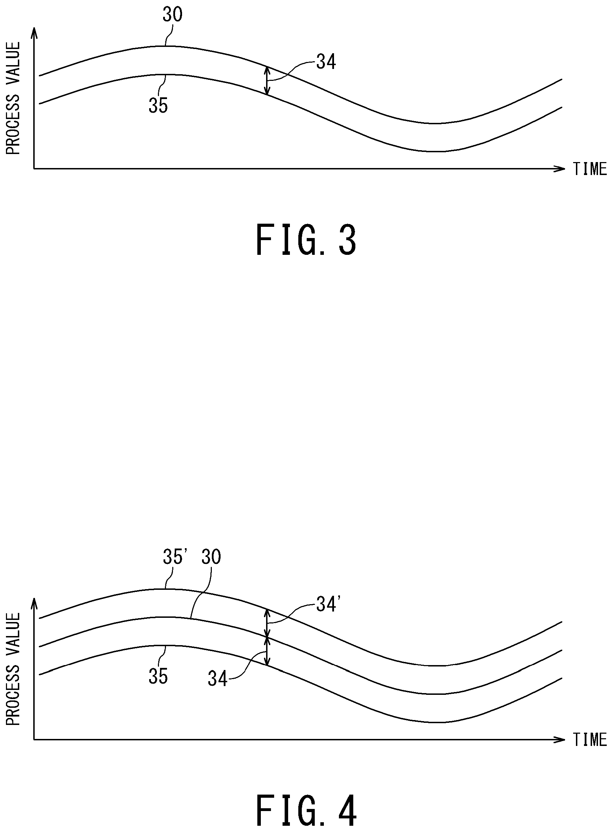

Fig. 3 illustrates one case of a correction concept in the calculation section 25. The calculation section 25 calculates the corrected process value 35 by performing computation on the actual process value 30 with the use of the correction value 34. In the case of the waveform in Fig. 3, the corrected process value 35 is calculated by subjecting the actual process value 30 to subtraction.

This corrected process value 35 is selected by the signal selection section 26 so as to be inputted to the learning-model generation unit 13. As a result, additional data (i.e., the corrected process value 35), which are not included in the actual data (i.e., actual process values 30) acquired from the plant 2, can be added as the data to be used for the machine learning.

Fig. 4 illustrates another case of the correction concept in the calculation section 25. The calculation section 25 uses a plurality of correction values 34 and 34' for one actual process value 30 so as to calculate a plurality of corrected process values 35 and 35'. In the case of the waveform in Fig. 4, two corrected process values 35 and 35' are calculated by subjecting one actual process value 30 to arithmetic addition and subtraction with the use of the respective correction values 34 and 34'.

The anomaly sign detection system 1 of the first embodiment can appropriately augment normal data for time-series data during the machine learning. In addition to the waveform of the actual process value 30, the anomaly sign detection model can also identify the waveform of the corrected process value 35 as the normal state. Thus, even if the actual process value 30 fluctuates to the corrected process value 35 during operation of the plant 2, the possibility of detecting it as an anomaly can be reduced. In other words, the configuration of the first embodiment leads to reduction in the total number of detections and can improve the detection performance that is equivalent to "the ratio of the number of correct anomaly detections to the total number of detections". In other words, the configuration of the first embodiment can suppress false positive in which the detection computer 6 unnecessarily detects during operation of the plant 2 that the operation state is different from before.

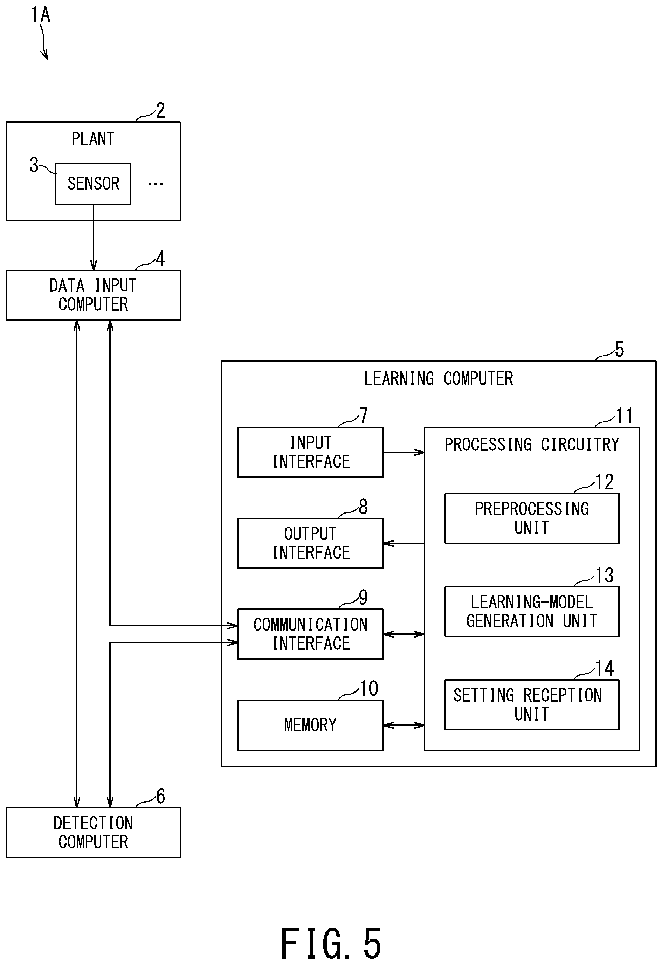

[SECOND EMBODIMENT] Next, the second embodiment will be described by using Fig. 5 to Fig. 9. The same reference signs are assigned to the same components as those shown in the above-described embodiment, and duplicate description is omitted.

As shown in Fig. 5, the processing circuitry 11 of the anomaly sign detection system 1A of the second embodiment further includes a setting reception unit 14 in addition to the preprocessing unit 12 and the learning-model generation unit 13. These units 12 to 14 are achieved by causing the CPU to execute the programs stored in the memory or the HDD.

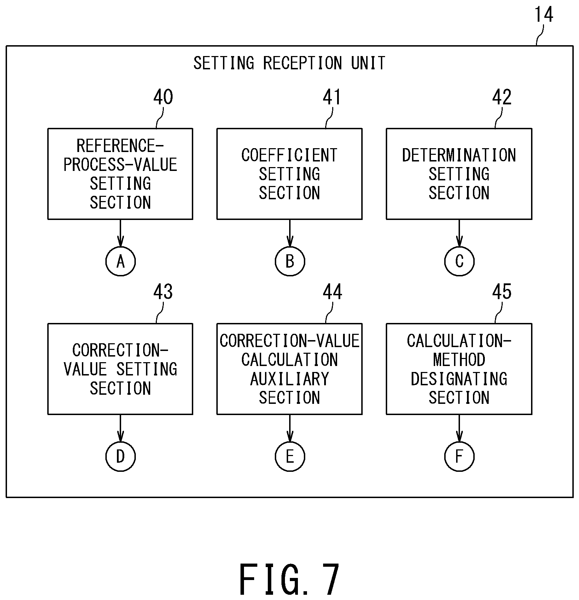

As shown in Fig. 7, the setting reception unit 14 includes: a reference-process-value setting section 40; a coefficient setting section 41; a determination setting section 42; a correction-value setting section 43; a correction-value calculation auxiliary section 44; and a calculation-method designating section 45.

The reference-process-value setting section 40 receives an external input for selecting the reference process value 31, for example, receives a user's input operation. In this manner, the user can arbitrarily select the reference process value 31.

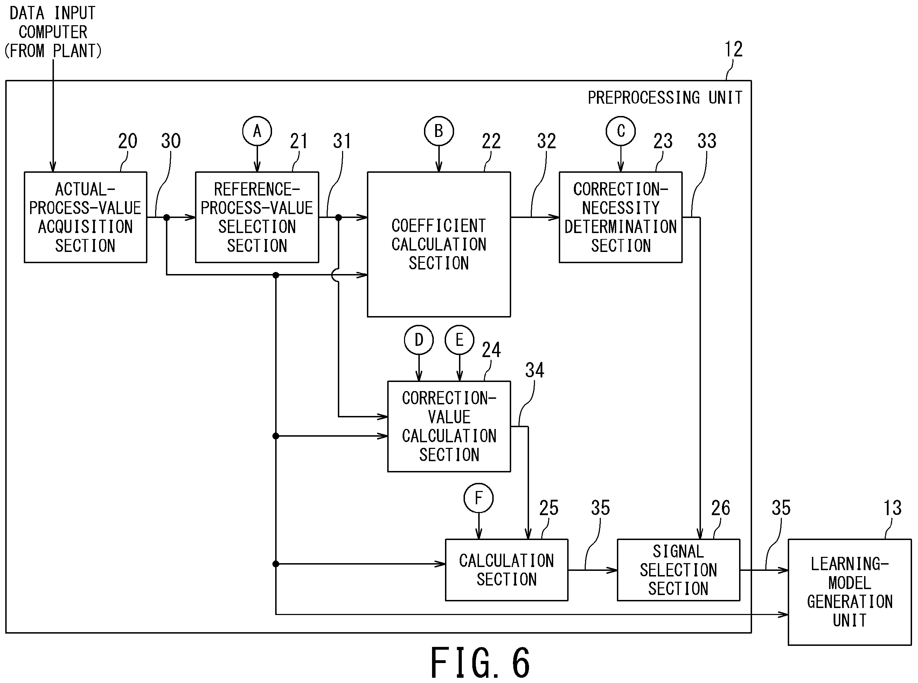

Although the selection of the reference process value 31 can be performed automatically, the reference process value 31 can also be arbitrarily selected by a user's input operation. For example, under the setting situation where the seawater temperature is automatically selected as the reference process value 31 unless it is specifically selected, if the user wants to select the heat-source output of the plant 2 as the reference process value 31, the user can manually perform the setting of the reference process value 31 such that this heat-source output is preferentially selected as the reference process value 31 instead of the seawater temperature in the reference-process-value selection section 21 (Fig. 6).

The coefficient setting section 41 receives an external input for calculating the correction-necessity coefficient of determination 32, for example, receives a user's input operation. In this manner, the user can arbitrarily set conditions for calculating the correction-necessity coefficient of determination 32.

Although the correction-necessity coefficient of determination 32 can be automatically calculated, the correction-necessity coefficient of determination 32 can also be arbitrarily set by a user's input operation. When the user performs the setting of the correction-necessity coefficient of determination 32, the correction-necessity coefficient of determination 32 having been set by the user is preferentially set in the coefficient calculation section 22 (Fig. 6).

The determination setting section 42 receives an external input for determining whether correction is necessary or not, for example, receives a user's input operation. In this manner, the user can arbitrarily perform the setting for determining whether correction is necessary or not.

Although the determination as to whether correction is necessary or unnecessary can be executed automatically, this determination can be arbitrarily performed by a user's input operation. When the user performs this setting for determining the necessity of correction, the determination result having been set by the user is preferentially obtained in the correction-necessity determination section 23 (Fig. 6).

The correction-value setting section 43 receives an external input for calculating the correction value 34, for example, receives a user's input operation. In this manner, the user can arbitrarily perform the setting for calculating the correction value 34.

Although the correction value 34 can be automatically calculated, the correction value 34 can also be arbitrarily set by a user's input operation. When the user performs the setting of the correction value 34, the correction value 34 having been set by the user is preferentially set in the correction-value calculation section 24 (Fig. 6).

The correction-value calculation auxiliary section 44 receives an external input for auxiliary adjustment of the correction value 34, for example, receives a user's input operation. In this manner, the user can arbitrarily adjust the correction value 34 in the correction-value calculation section 24 (Fig. 6).

The calculation-method designating section 45 receives an external input for designating the calculation method to be used for correcting at least one actual process value 30 with the correction value 34, for example, receives a user's input operation. In this manner, the user can arbitrarily designate the calculation method.

Although the calculation method can be designated automatically, the calculation method can be arbitrarily set by a user's input operation. When the user performs the setting for designating the calculation method, the calculation method having been designated by the user is preferentially set in the calculation section 25 (Fig. 6).

Since various settings are made by an input from the outside in the second embodiment, its effects are obtained in the case of correcting the operation pattern of redundant apparatuses, for example.

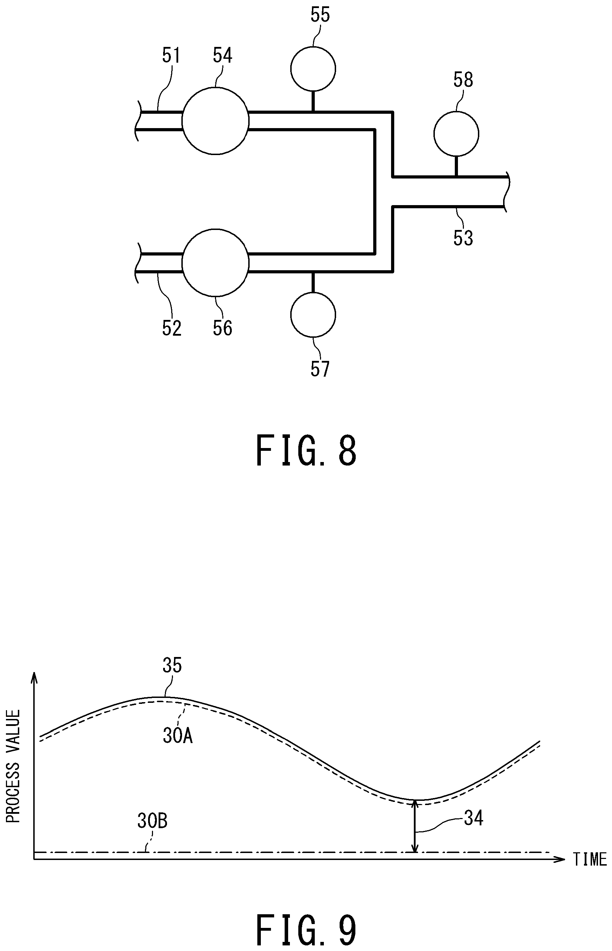

First, a case of erroneous determination of redundant apparatuses will be described. For example, it is assumed that there is a system in which first piping 51 and second piping 52 join in the middle so as to form third piping 53 as shown in Fig. 8. The first piping 51 is provided with a first pump 54 and a first pressure gauge 55 configured to measure its discharge pressure. The second piping 52 is provided with a second pump 56 and a second pressure gauge 57 configured to measure its discharge pressure. The third piping 53 is provided with a flowmeter 58 configured to measure its flow rate.

It is assumed that the first pump 54 and the second pump 56 provide system redundancy. As to the first pump 54 and the second pump 56, their conditions for the redundant operation are selected by a plant operator. For example, during the learning period, only one side, i.e., the side of the first pump 54 (working-side pump) is operated at all times. Also during this learning period, the other side, i.e., the side of the second pump 56 (stop-side pump) continues to be stopped.

Consider a case where only the first pump 54 is operated in a learning period. During this learning period, the correlation between the discharge pressure of the first pump 54 indicating the operating state and the flow rate of the third piping 53 indicating the movement of the entire system is learned, but the correlation between the discharge pressure of the second pump 56 and the flow rate of the third piping 53 is not learned because the discharge pressure of the stopped second pump 56 does not change during this learning period.

For example, during a monitoring period, in some cases, the conditions for the redundant operation change depending on selection by the plant operator, which brings the entire system into the state where the first pump 54 is stopped and only the second pump 56 is operated. In this case, due to the flow rate of the third piping 53 linked with the discharge pressure of the second pump 56, the predicted value of the discharge pressure of the first pump 54, which is recognized or learned as having correlation with the third piping 53, is subjected to influential erroneous change (i.e., erroneously changes by being influenced by another parameter that is accidentally or erroneously learned as having correlation therewith). In addition, the predicted value of the flow rate of the third piping 53 is affected and is subjected to the influential erroneous change.

In other words, the respective predicted values (determination output data) of the discharge pressure of the first pump 54 and the flow rate of the third piping 53 become different from or deviate from the actually measured values (determination input data). As a result, the discharge pressure of the first pump 54 and the flow rate of the third piping 53 are erroneously determined to be abnormal even though there is no anomaly.

In the second embodiment as shown in Fig. 9, the actual data acquired from the first pressure gauge 55 are treated as the actual process value 30A to be used for correction, and the actual data acquired from the second pressure gauge 57 are treated as the actual process value 30B to be corrected. It is necessary to augment the actual data for the case where the second pump 56 is in operation. Thus, the actual process value 30B to be corrected is corrected by the correction value 34, and thereby the corrected process value 35 is calculated.

In this case, the coefficient setting section 41 increases the correction-necessity coefficient of determination 32 corresponding to the actual process value 30B to be corrected. For example, the correction-necessity coefficient of determination 32 is set to "1". Additionally or alternatively, the determination setting section 42 sets the correction determination flag 33, which corresponds to the actual process value 30B to be corrected, to "Correction Required". In this manner, execution of correcting the actual process value 30B to be corrected can be fixed.

The correction-value setting section 43 sets conditions for calculating the correction value 34 on the basis of the actual process value 30A to be used for correction. In other words, the difference between the actual process value 30A to be used for correction and the actual process value 30B to be corrected is set as the correction value 34. Further, the calculation-method designating section 45 designates arithmetic addition as the calculation method, and consequently, the actual process value 30B to be corrected is corrected as the corrected process value 35.

The stopped second pump 56 is regarded as having been operated like the corrected process value 35. This corrected process value 35 is used as the additional data in the machine learning.

In the second embodiment as shown in Fig. 7, one of the effects of providing the correction-value calculation auxiliary section 44 is that the actual data required to calculate the correction value 34 can be acquired from the outside of the monitoring target plant 2.

For example, though a description has been given of the case where the correction value 34 is calculated on the basis of the fluctuation range of the seawater temperature in the first embodiment, it is possible that the fluctuation range of the seawater temperature cannot be obtained from the actual data of the plant 2. In this case, a more appropriate correction value 34 can be set by setting the correction value 34 on the basis of external data such as data published by the state institution.

According to the second embodiment, knowledge from the outside other than the plant 2 can be incorporated, and thereby, the normal data for the time-series data can be augmented more appropriately.

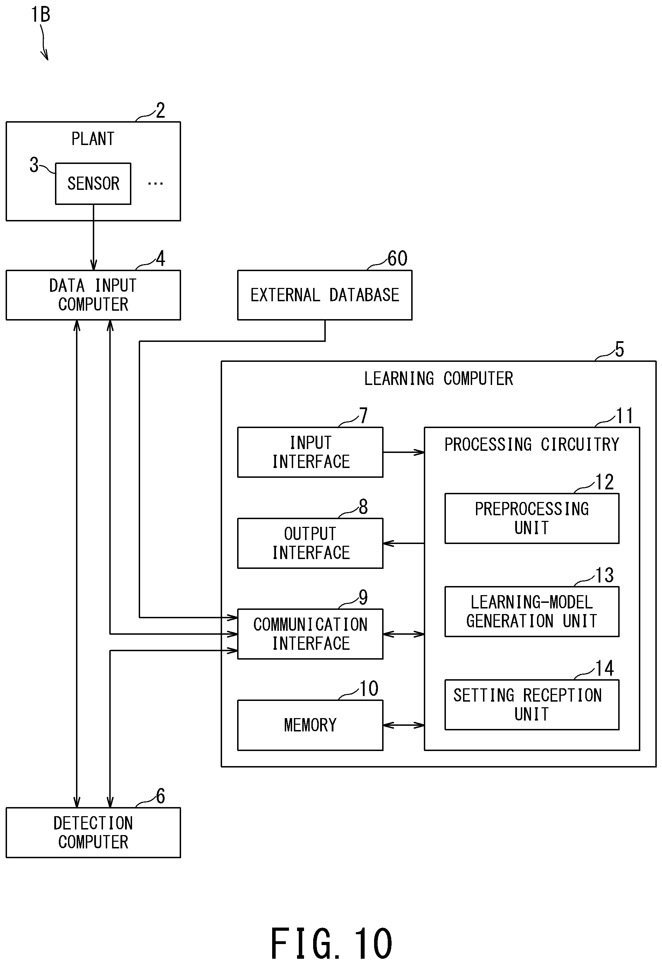

[THIRD EMBODIMENT] Next, the third embodiment will be described by using Fig. 10 to Fig. 12. The same reference signs are assigned to the same components as those shown in the above-described embodiments, and duplicate description is omitted.

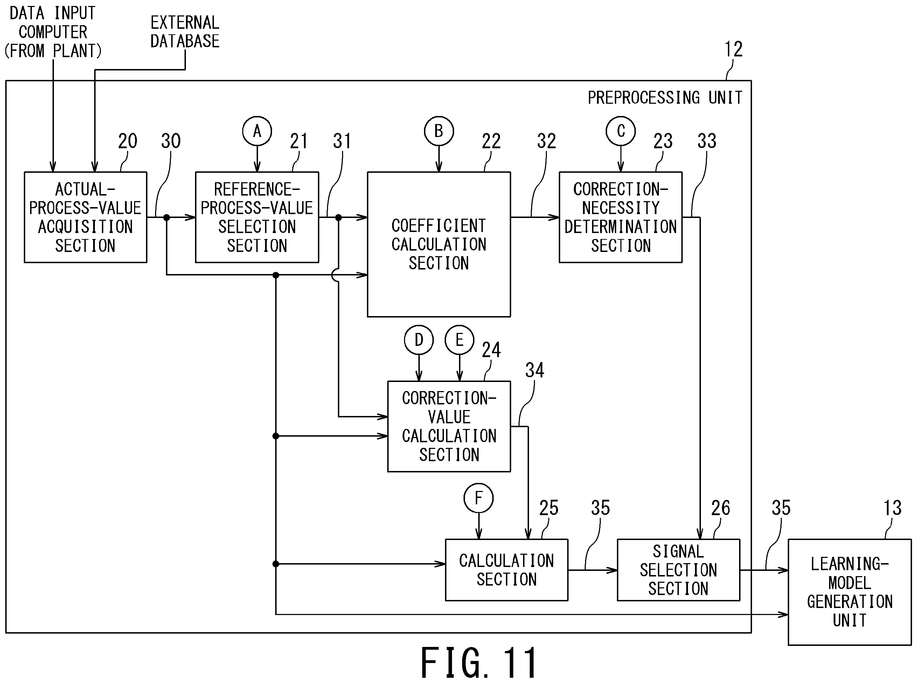

As shown in Fig. 10 and Fig. 11, the anomaly sign detection system 1B of the third embodiment further includes an external database 60 in addition to the configuration of the second embodiment. The configuration of the processing circuitry 11 of the third embodiment is the same as that of the processing circuitry 11 of the second embodiment. As to the description of the setting reception unit 14, refer to Fig. 7 as appropriate.

The learning computer 5 of the third embodiment acquires the additional learning data generated by imitating the actual process values 30 from the external database 60 and generates the learning input data on the basis of the additional learning data. In this manner, arbitrary design values, model-based theoretical values, or predicted values newly calculated by AI can be used as the learning data.

For example, in the operation of the plant 2, the monitoring target data may be added for the purpose of improving functionality and monitoring. For example, in some cases, a system bypass line is added to improve operability and the flow rate of this bypass line is additionally measured. In this case, there is no learning input data for the added data, and thus, the detection computer 6 cannot determine that the added data are in a state different from the normal state.

In this case, it is conceivable to use the arbitrary design values, the model-based theoretical values, or the predicted values newly calculated by AI as the learning input data. However, it is not possible to reflect the correlation between the data as the actual facility, especially the effects at the time of transient change and the effects of noise. Thus, there is a possibility that the learning input data are not necessarily correct or appropriate for this case.

The configuration of the third embodiment can solve this problem by augmenting the data. For example, the arbitrary design values, the model-based theoretical values, or the predicted values newly calculated by AI are set as the additional learning data. These additional learning data are then inputted to the actual-process-value acquisition section 20. The reference-process-value setting section 40 (Fig. 7) performs setting for selecting the reference process value 31 to be used for correcting the additional learning data.

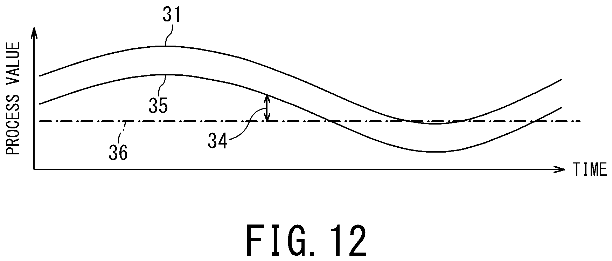

Fig. 12 illustrates a correction concept of the additional learning data. The reference process value 31 selected by the setting of the reference-process-value setting section 40 (Fig. 7) is the process value to be used for the correction. In addition, the additional learning data are illustrated as a constant value 36 assuming the design value.

The correction determination flag 33 is set to "Correction Required" by at least one of the coefficient setting section 41 (Fig. 7) and the determination setting section 42 (Fig. 7). The correction-value calculation section 24 or the correction-value setting section 43 (Fig. 7) sets the correction value 34 as the fluctuation range (i.e., difference) from the average value of the reference process value 31 to be used for the correction. Further, the calculation-method designating section 45 (Fig. 7) designates "arithmetic addition" as the calculation method. Moreover, the corrected process value 35 is calculated by adding the correction value 34 to the additional learning data (i.e., constant value 36).

In the third embodiment, a target for the anomaly sign detection can be added, and the additional data having characteristics unique to the actual apparatuses can be appropriately augmented as the normal data for learning.

As above, although the present invention has been described on the basis of the first to third embodiments, the configuration applied in any one of the embodiments may be applied to other embodiments or the configurations in the respective embodiments may be applied in combination.

Although the function of the actual-process-value acquisition section 20 is provided in the learning computer 5 in the above-described embodiments, another aspect may be adopted. For example, the function of the actual-process-value acquisition section 20 may be provided in the data input computer 4. In this case, the learning computer 5 does not need the function of the actual-process-value acquisition section 20, and the plurality of actual process values 30 processed by the data input computer 4 are inputted to the learning computer 5 and then are subjected to subsequent processing.

The anomaly sign detection system 1 includes a control device, a storage device, a output device, an input device, and a communication interface. The control device includes a highly integrated processor such as a Central Processing Unit (CPU), a Graphics Processing Unit (GPU), a Field Programmable Gate Array (FPGA), and a special-purpose chip. The storage device includes a Read Only Memory (ROM), a Random Access Memory (RAM), a Hard Disk Drive (HDD), a Solid-State Drive (SSD), or the like. The output device includes a display panel, or the like. The input device includes a mouse, a keyboard, or the like. The anomaly sign detection system 1 can be achieved by hardware configuration with the use of a normal computer.

Note that the program executed in the anomaly sign detection system 1 is provided by being incorporated in a memory such as the ROM in advance. Additionally, or alternatively, the program may be provided by being stored as a file of installable or executable format in a non-transitory computer-readable storage medium such as a CD-ROM, a CD-R, a memory card, a DVD, and a flexible disk (FD) .

In addition, the program executed in the anomaly sign detection system 1 may be stored on a computer connected to a network such as the Internet and be provided by being downloaded via a network. That is, the program may be provided from resources of cloud computing. Alternatively, a server on the cloud computing may execute the program and only its processing result may be provided via the cloud computing. Further, the anomaly sign detection system 1 can also be configured by interconnecting and combining separate modules, which independently exhibit respective functions of the components, via a network or a dedicated line.

According to at least one embodiment described above, at least one actual process value 30 determined to be correlated with the reference process value 31 is corrected by using the correction value 34, thereby false positive can be suppressed, and consequently, the reliability of the anomaly sign detection can be improved.

While certain embodiments have been described, these embodiments have been presented by way of example only, and are not intended to limit the scope of the inventions. The articles "the", "a" and "an" are not necessarily limited to mean only one, but rather are inclusive and open ended so as to include, optionally, multiple such elements.

## Claims

1. An anomaly sign detection system (1) comprising one or more computers (5) configured to perform machine learning of an anomaly sign detection model that detects at least one of an anomaly in a target facility (2) to be monitored and a sign of the anomaly,
wherein the one or more computers (5) are configured to:
acquire a plurality of actual process values generated in the target facility (2);
select at least one reference process value as a correction reference from the plurality of actual process values, wherein the reference process value to be selected has correlations with one or more other actual process values, wherein the selection is based on the number of correlations;
calculate a correction-necessity coefficient of determination from at least one actual process value included in the plurality of actual process values and the at least one reference process value, the correction-necessity coefficient of determination being for determining whether the at least one actual process value has correlation with the at least one reference process value or not;
calculate a correction value for correcting the at least one actual process value using the at least one actual process value and the at least one reference process value;
determine whether each of the plurality of actual process values is correlated with the at least one reference process value or not, based on the correction-necessity coefficient of determination; the anomaly sign detection system (1) being **characterized in that** the one or more computers (5) are further configured to:
use the correction value for correcting at least one actual process value determined to be correlated with the at least one reference process value among the plurality of actual process values based on the correction-necessity coefficient of determination;
generate learning input data including at least one corrected process value as the at least one actual process value corrected by the correction value; and
perform the machine learning by inputting the learning input data to the anomaly sign detection model.

2. The anomaly sign detection system according to claim 1, wherein the correction-necessity coefficient of determination is calculated by using a coefficient of determination.

3. The anomaly sign detection system according to claim 1 or claim 2, wherein:
the correction value is calculated by using a linear regression coefficient; and
the at least one corrected process value is generated by subjecting the correction value to arithmetic addition, subtraction, arithmetic multiplication, or division.

4. The anomaly sign detection system according to claim 1 or claim 2, wherein the one or more computers (5) are configured to receive an external input for selecting the at least one reference process value.

5. The anomaly sign detection system according to claim 1 or claim 2, wherein the one or more computers (5) are configured to receive an external input for calculating the correction-necessity coefficient of determination.

6. The anomaly sign detection system according to claim 1 or claim 2, wherein the one or more computers (5) are configured to receive an external input for calculating the correction value.

7. The anomaly sign detection system according to claim 1 or claim 2, wherein the one or more computers (5) are configured to receive an external input for auxiliary adjustment of the correction value.

8. The anomaly sign detection system according to claim 1 or claim 2, wherein the one or more computers (5) are configured to receive an external input for designating a calculation method that is to be used for correcting the at least one actual process value with the correction value.

9. The anomaly sign detection system according to claim 1 or claim 2, wherein the one or more computers (5) are configured to:
acquire additional learning data generated by simulating the plurality of actual process values from an external database; and
calculate the learning input data based on the additional learning data.

10. An anomaly sign detection model generation method of using one or more computers (5) configured to perform machine learning of an anomaly sign detection model that detects at least one of an anomaly in a target facility (2) to be monitored and a sign of the anomaly,
the anomaly sign detection model generation method causing the one or more computers (5) to execute processing comprising:
acquiring a plurality of actual process values generated in the target facility;
selecting at least one reference process value as a correction reference from the plurality of actual process values, wherein the reference process value to be selected has correlations with one or more other actual process values, wherein the selection is based on the number of correlations;
calculating a correction-necessity coefficient of determination from at least one actual process value included in the plurality of actual process values and the at least one reference process value, the correction-necessity coefficient of determination being for determining whether the at least one actual process value has correlation with the at least one reference process value or not;
calculating a correction value for correcting the at least one actual process value using the at least one actual process value and the at least one reference process value;
determining whether each of the plurality of actual process values is correlated with the at least one reference process value or not, based on the correction-necessity coefficient of determination; the anomaly sign detection model generation method being **characterized by**:
using the correction value for correcting at least one actual process value determined to be correlated with the at least one reference process value among the plurality of actual process values based on the correction-necessity coefficient of determination;
generating learning input data including at least one corrected process value as the at least one actual process value corrected by the correction value; and
performing the machine learning by inputting the learning input data to the anomaly sign detection model.

11. A computer-readable anomaly sign detection model generation program to be executed by one or more computers (5) configured to perform machine learning of an anomaly sign detection model that detects at least one of an anomaly in a target facility (2) to be monitored and a sign of the anomaly,
wherein the computer-readable anomaly sign detection model generation program allows the one or more computers (5) to perform:
an acquisition process of acquiring a plurality of actual process values generated in the target facility;
a selection process of selecting at least one reference process value as a correction reference from the plurality of actual process values, wherein the reference process value to be selected has correlations with one or more other actual process values, wherein the selection is based on the number of correlations;
a calculation process of calculating a correction-necessity coefficient of determination from at least one actual process value included in the plurality of actual process values and the at least one reference process value, the correction-necessity coefficient of determination being for determining whether the at least one actual process value has correlation with the at least one reference process value or not;
another calculation process of calculating a correction value for correcting the at least one actual process value using the at least one actual process value and the at least one reference process value;
a determination process of determining whether each of the plurality of actual process values is correlated with the at least one reference process value or not, based on the correction-necessity coefficient of determination; the computer-readable anomaly sign detection model generation program being **characterized in that** it allows the one or more computers (5) to perform:
a correction process of using the correction value for correcting at least one actual process value determined to be correlated with the at least one reference process value among the plurality of actual process values based on the correction-necessity coefficient of determination;
a generation process of generating learning input data including at least one corrected process value as the at least one actual process value corrected by the correction value; and
a machine learning process of performing the machine learning by inputting the learning input data to the anomaly sign detection model.

## Patentansprüche

1. Ein System zur Erkennung von Anomalieanzeichen (1), umfassend einen oder mehrere Computer (5), die eingerichtet sind, maschinelles Lernen eines Modells zur Erkennung von Anomalieanzeichen durchzuführen, das mindestens eines von einer Anomalie in einer zu überwachenden Zielanlage (2) und einem Anomalieanzeichen erkennt,
wobei der eine oder die mehreren Computer (5) eingerichtet sind zum:
Erfassen einer Vielzahl von tatsächlichen Prozesswerten, die in der Zielanlage (2) erzeugt werden;
Auswählen mindestens eines Referenzprozesswerts als Korrekturreferenz aus der Vielzahl von tatsächlichen Prozesswerten, wobei der auszuwählende Referenzprozesswert Korrelationen mit einem oder mehreren anderen tatsächlichen Prozesswerten aufweist, wobei die Auswahl auf der Anzahl der Korrelationen basiert;
Berechnen eines Bestimmtheitskoeffizienten der Korrekturerfordernis aus mindestens einem tatsächlichen Prozesswert, der in der Vielzahl von tatsächlichen Prozesswerten enthalten ist, und dem mindestens einen Referenzprozesswert, wobei der Bestimmtheitskoeffizient der Korrekturerfordernis dazu dient, zu bestimmen, ob der mindestens eine tatsächliche Prozesswert eine Korrelation mit dem mindestens einen Referenzprozesswert aufweist oder nicht;
Berechnen eines Korrekturwerts zum Korrigieren des mindestens einen tatsächlichen Prozesswerts unter Verwendung des mindestens einen tatsächlichen Prozesswerts und des mindestens einen Referenzprozesswerts;
Bestimmen, ob jeder der Vielzahl von tatsächlichen Prozesswerten mit dem mindestens einen Referenzprozesswert korreliert ist oder nicht, basierend auf dem Bestimmtheitskoeffizienten der Korrekturerfordernis; wobei das System zur Erkennung von Anomalieanzeichen **dadurch gekennzeichnet ist, dass** der eine oder die mehreren Computer (5) weiterhin eingerichtet sind zum:
Verwenden des Korrekturwerts zum Korrigieren mindestens eines tatsächlichen Prozesswerts, der basierend auf dem Bestimmtheitskoeffizienten der Korrekturerfordernis als mit dem mindestens einen Referenzprozesswert korreliert bestimmt wurde, unter der Vielzahl von tatsächlichen Prozesswerten;
Erzeugen von Lerneingabedaten, die mindestens einen berichtigten Prozesswert als den mindestens einen durch den Korrekturwert korrigierten tatsächlichen Prozesswert enthalten; und
Durchführen des maschinellen Lernens durch Eingeben der Lerneingabedaten in das Modell zur Erkennung von Anomalieanzeichen.

2. Das System zur Erkennung von Anomalieanzeichen gemäß Anspruch 1, wobei der Bestimmtheitskoeffizient der Korrekturerfordernis unter Verwendung eines Bestimmtheitskoeffizienten berechnet wird.

3. Das System zur Erkennung von Anomalieanzeichen gemäß Anspruch 1 oder Anspruch 2, wobei:
der Korrekturwert unter Verwendung eines linearen Regressionskoeffizienten berechnet wird; und
der mindestens eine berichtigte Prozesswert durch Anwendung von arithmetischer Addition, Subtraktion, arithmetischer Multiplikation oder Division auf den Korrekturwert erzeugt wird.

4. Das System zur Erkennung von Anomalieanzeichen gemäß Anspruch 1 oder Anspruch 2, wobei der eine oder die mehreren Computer (5) eingerichtet sind, eine externe Eingabe zum Auswählen des mindestens einen Referenzprozesswerts zu empfangen.

5. Das System zur Erkennung von Anomalieanzeichen gemäß Anspruch 1 oder Anspruch 2, wobei der eine oder die mehreren Computer (5) eingerichtet sind, eine externe Eingabe zum Berechnen des Bestimmtheitskoeffizienten der Korrekturerfordernis zu empfangen

6. Das System zur Erkennung von Anomalieanzeichen gemäß Anspruch 1 oder Anspruch 2, wobei der eine oder die mehreren Computer (5) eingerichtet sind, eine externe Eingabe zum Berechnen des Korrekturwerts zu empfangen.

7. Das System zur Erkennung von Anomalieanzeichen gemäß Anspruch 1 oder Anspruch 2, wobei der eine oder die mehreren Computer (5) eingerichtet sind, eine externe Eingabe zur Hilfsanpassung des Korrekturwerts zu empfangen.

8. Das System zur Erkennung von Anomalieanzeichen gemäß Anspruch 1 oder Anspruch 2, wobei der eine oder die mehreren Computer (5) eingerichtet sind, eine externe Eingabe zum Festlegen eines Berechnungsverfahrens zu empfangen, das zum Korrigieren des mindestens einen tatsächlichen Prozesswerts mit dem Korrekturwert verwendet werden soll.

9. Das System zur Erkennung von Anomalieanzeichen gemäß Anspruch 1 oder Anspruch 2, wobei der eine oder die mehreren Computer (5) eingerichtet sind zum:
Erfassen von zusätzlichen Lerndaten, die durch Simulieren der Vielzahl von tatsächlichen Prozesswerten aus einer externen Datenbank erzeugt werden; und
Berechnen der Lerneingabedaten basierend auf den zusätzlichen Lerndaten.

10. Ein Verfahren zur Erzeugung eines Modells zur Erkennung von Anomalieanzeichen unter Verwendung eines oder mehrerer Computer (5), die eingerichtet sind, maschinelles Lernen eines Modells zur Erkennung von Anomalieanzeichen durchzuführen, das mindestens eines von einer Anomalie in einer zu überwachenden Zielanlage (2) und einem Anomalieanzeichen erkennt,
wobei das Verfahren zur Erzeugung eines Modells zur Erkennung von Anomalieanzeichen den einen oder die mehreren Computer (5) veranlasst, eine Verarbeitung auszuführen, die umfasst:
Erfassen einer Vielzahl von tatsächlichen Prozesswerten, die in der Zielanlage erzeugt werden;
Auswählen mindestens eines Referenzprozesswerts als Korrekturreferenz aus der Vielzahl von tatsächlichen Prozesswerten, wobei der auszuwählende Referenzprozesswert Korrelationen mit einem oder mehreren anderen tatsächlichen Prozesswerten aufweist, wobei die Auswahl auf der Anzahl der Korrelationen basiert;
Berechnen eines Bestimmtheitskoeffizienten der Korrekturerfordernis aus mindestens einem tatsächlichen Prozesswert, der in der Vielzahl von tatsächlichen Prozesswerten enthalten ist, und dem mindestens einen Referenzprozesswert, wobei der Bestimmtheitskoeffizient der Korrekturerfordernis dazu dient, zu bestimmen, ob der mindestens eine tatsächliche Prozesswert eine Korrelation mit dem mindestens einen Referenzprozesswert aufweist oder nicht;
Berechnen eines Korrekturwerts zum Korrigieren des mindestens einen tatsächlichen Prozesswerts unter Verwendung des mindestens einen tatsächlichen Prozesswerts und des mindestens einen Referenzprozesswerts;
Bestimmen, ob jeder der Vielzahl von tatsächlichen Prozesswerten mit dem mindestens einen Referenzprozesswert korreliert ist oder nicht, basierend auf dem Bestimmtheitskoeffizienten der Korrekturerfordernis; wobei das Verfahren zur Erzeugung eines Modells zur Erkennung von Anomalieanzeichen **gekennzeichnet ist durch** das:
Verwenden des Korrekturwerts zum Korrigieren mindestens eines tatsächlichen Prozesswerts, der basierend auf dem Bestimmtheitskoeffizienten der Korrekturerfordernis als mit dem mindestens einen Referenzprozesswert korreliert bestimmt wurde, unter der Vielzahl von tatsächlichen Prozesswerten;
Erzeugen von Lerneingabedaten, die mindestens einen berichtigten Prozesswert als den mindestens einen durch den Korrekturwert korrigierten tatsächlichen Prozesswert enthalten; und
Durchführen des maschinellen Lernens durch Eingeben der Lerneingabedaten in das Modell zur Erkennung von Anomalieanzeichen.

11. Ein computerlesbares Programm zur Erzeugung eines Modells zur Erkennung von Anomalieanzeichen, das von einem oder mehreren Computern (5) auszuführen ist, die eingerichtet sind, maschinelles Lernen eines Modells zur Erkennung von Anomalieanzeichen durchzuführen, das mindestens eines von einer Anomalie in einer zu überwachenden Zielanlage (2) und einem Anomalieanzeichen erkennt,
wobei das computerlesbare Programm zur Erzeugung eines Modells zur Erkennung von Anomalieanzeichen es dem einen oder den mehreren Computern (5) ermöglicht, Folgendes durchzuführen:
einen Erfassungsprozess zum Erfassen einer Vielzahl von tatsächlichen Prozesswerten, die in der Zielanlage erzeugt werden;
einen Auswahlprozess zum Auswählen mindestens eines Referenzprozesswerts als Korrekturreferenz aus der Vielzahl von tatsächlichen Prozesswerten, wobei der auszuwählende Referenzprozesswert Korrelationen mit einem oder mehreren anderen tatsächlichen Prozesswerten aufweist, wobei die Auswahl auf der Anzahl der Korrelationen basiert;
einen Berechnungsprozess zum Berechnen eines Bestimmtheitskoeffizienten der Korrekturerfordernis aus mindestens einem tatsächlichen Prozesswert, der in der Vielzahl von tatsächlichen Prozesswerten enthalten ist, und dem mindestens einen Referenzprozesswert, wobei der Bestimmtheitskoeffizient der Korrekturerfordernis dazu dient, zu bestimmen, ob der mindestens eine tatsächliche Prozesswert eine Korrelation mit dem mindestens einen Referenzprozesswert aufweist oder nicht;
einen weiteren Berechnungsprozess zum Berechnen eines Korrekturwerts zum Korrigieren des mindestens einen tatsächlichen Prozesswerts unter Verwendung des mindestens einen tatsächlichen Prozesswerts und des mindestens einen Referenzprozesswerts;
einen Bestimmungsprozess zum Bestimmen, ob jeder der Vielzahl von tatsächlichen Prozesswerten mit dem mindestens einen Referenzprozesswert korreliert ist oder nicht, basierend auf dem Bestimmtheitskoeffizienten der Korrekturerfordernis; wobei das computerlesbare Programm zur Erzeugung eines Modells zur Erkennung von Anomalieanzeichen **dadurch gekennzeichnet ist, dass** es dem einem oder den mehreren Computern (5) ermöglicht, Folgendes durchzuführen:
einen Korrekturprozess zum Verwenden des Korrekturwerts zum Korrigieren mindestens eines tatsächlichen Prozesswerts, der basierend auf dem Bestimmtheitskoeffizienten der Korrekturerfordernis als mit dem mindestens einen Referenzprozesswert korreliert bestimmt wurde, unter der Vielzahl von tatsächlichen Prozesswerten;
einen Erzeugungsprozess zum Erzeugen von Lerneingabedaten, die mindestens einen berichtigten Prozesswert als den mindestens einen durch den Korrekturwert korrigierten tatsächlichen Prozesswert enthalten; und
einen Prozess des maschinellen Lernens zum Durchführen des maschinellen Lernens durch Eingeben der Lerneingabedaten in das Modell zur Erkennung von Anomalieanzeichen.

## Revendications

1. Système de détection de signe d'anomalie (1) comprenant un ou plusieurs ordinateurs (5) configurés pour effectuer un apprentissage automatique d'un modèle de détection de signe d'anomalie qui détecte au moins un parmi une anomalie dans une installation cible (2) à être surveillée et un signe de l'anomalie,
dans lequel le ou les ordinateurs (5) sont configurés pour :
acquérir une pluralité de valeurs de traitement réelles générées dans l'installation cible (2) ;
sélectionner au moins une valeur de traitement de référence en tant qu'une référence de correction parmi la pluralité de valeurs de traitement réelles, la valeur de traitement de référence à être sélectionnée présentant des corrélations avec une ou plusieurs autres valeurs de traitement réelles, la sélection étant fondée sur le nombre de corrélations ;
calculer un coefficient de nécessité de correction de détermination à partir d'au moins une valeur de traitement réelle incluse dans la pluralité de valeurs de traitement réelles et de la au moins une valeur de traitement de référence, le coefficient de nécessité de correction de détermination étant pour déterminer si la au moins une valeur de traitement réelle présente une corrélation avec la au moins une valeur de traitement de référence ou non ;
calculer une valeur de correction pour corriger la au moins une valeur de traitement réelle à l'aide de la au moins une valeur de traitement réelle et de la au moins une valeur de traitement de référence ;
déterminer si chacune de la pluralité de valeurs de traitement réelles est corrélée ou non avec la au moins une valeur de traitement de référence, sur la base du coefficient de nécessité de correction de détermination ; le système de détection de signe d'anomalie (1) étant **caractérisé en ce que** le ou les ordinateurs (5) sont en outre configurés pour :
utiliser la valeur de correction pour corriger au moins une valeur de traitement réelle déterminée comme étant à être corrélée avec la au moins une valeur de traitement de référence parmi la pluralité de valeurs de traitement réelles sur la base du coefficient de nécessité de correction de détermination ;
générer des données d'entrée d'apprentissage comprenant au moins une valeur de traitement corrigée en tant que la au moins une valeur de traitement réelle corrigée par la valeur de correction ; et
effectuer l'apprentissage automatique en introduisant les données d'entrée d'apprentissage dans le modèle de détection de signe d'anomalie.

2. Système de détection de signe d'anomalie selon la revendication 1, dans lequel le coefficient de nécessité de correction de détermination est calculé à l'aide d'un coefficient de détermination.

3. Système de détection de signe d'anomalie selon la revendication 1 ou la revendication 2, dans lequel :
la valeur de correction est calculée à l'aide d'un coefficient de régression linéaire ; et
la au moins une valeur de traitement corrigée est générée en soumettant la valeur de correction à une addition, une soustraction, une multiplication ou une division arithmétiques.

4. Système de détection de signe d'anomalie selon la revendication 1 ou la revendication 2, dans lequel le ou les ordinateurs (5) sont configurés pour recevoir une entrée externe pour sélectionner la au moins une valeur de traitement de référence.

5. Système de détection de signe d'anomalie selon la revendication 1 ou la revendication 2, dans lequel le ou les ordinateurs (5) sont configurés pour recevoir une entrée externe pour calculer le coefficient de nécessité de correction de détermination.

6. Système de détection de signe d'anomalie selon la revendication 1 ou la revendication 2, dans lequel le ou les ordinateurs (5) sont configurés pour recevoir une entrée externe pour calculer la valeur de correction.

7. Système de détection de signe d'anomalie selon la revendication 1 ou la revendication 2, dans lequel le ou les ordinateurs (5) sont configurés pour recevoir une entrée externe permettant un ajustement auxiliaire de la valeur de correction.

8. Système de détection de signe d'anomalie selon la revendication 1 ou la revendication 2, dans lequel le ou les ordinateurs (5) sont configurés pour recevoir une entrée externe pour désigner une méthode de calcul devant être utilisée pour corriger la au moins une valeur de traitement réelle à l'aide de la valeur de correction.

9. Système de détection de signe d'anomalie selon la revendication 1 ou la revendication 2, dans lequel le ou les ordinateurs (5) sont configurés pour :
acquérir des données d'apprentissage supplémentaires générées par la simulation de la pluralité de valeurs de traitement réelles à partir d'une base de données externe ; et
calculer les données d'entrée d'apprentissage sur la base des données d'apprentissage supplémentaires.

10. Procédé de génération de modèle de détection de signe d'anomalie utilisant un ou plusieurs ordinateurs (5) configurés pour effectuer un apprentissage automatique d'un modèle de détection de signe d'anomalie qui détecte au moins un parmi une anomalie dans une installation cible (2) à être surveillée et un signe de l'anomalie,
le procédé de génération de modèle de détection de signe d'anomalie amenant le ou les ordinateurs (5) à exécuter un traitement comprenant :
l'acquisition d'une pluralité de valeurs de traitement réelles générées dans l'installation cible ;
la sélection d'au moins une valeur de traitement de référence en tant qu'une référence de correction parmi la pluralité de valeurs de traitement réelles, la valeur de traitement de référence à être sélectionnée présentant des corrélations avec une ou plusieurs autres valeurs de traitement réelles, la sélection étant basée sur le nombre de corrélations ;
le calcul d'un coefficient de nécessité de correction de détermination à partir d'au moins une valeur de traitement réelle incluse dans la pluralité de valeurs de traitement réelles et de la au moins une valeur de traitement de référence, le coefficient de nécessité de correction de détermination étant pour déterminer si la au moins une valeur de traitement réelle présente ou non une corrélation avec la au moins une valeur de traitement de référence ;
le calcul d'une valeur de correction pour corriger la au moins une valeur de traitement réelle à l'aide de la au moins une valeur de traitement réelle et de la au moins une valeur de traitement de référence ;
la détermination de si chacune de la pluralité de valeurs de traitement réelles est corrélée ou non avec la au moins une valeur de traitement de référence, sur la base du coefficient de nécessité de correction de détermination ; le procédé de génération de modèle de détection de signe d'anomalie étant **caractérisé par** :
l'utilisation de la valeur de correction pour corriger au moins une valeur de traitement réelle déterminée comme étant corrélée avec la au moins une valeur de traitement de référence parmi la pluralité de valeurs de traitement réelles sur la base du coefficient de nécessité de correction de détermination ;
la génération de données d'entrée d'apprentissage comprenant au moins une valeur de traitement corrigée en tant que la au moins une valeur de traitement réelle corrigée par la valeur de correction ; et
la réalisation de l'apprentissage automatique en entrant les données d'entrée d'apprentissage dans le modèle de détection de signe d'anomalie.

11. Programme de génération de modèle de détection de signe d'anomalie lisible par ordinateur, pour être exécuté par un ou plusieurs ordinateurs (5) configurés pour effectuer l'apprentissage automatique d'un modèle de détection de signe d'anomalie qui détecte au moins un parmi une anomalie dans une installation cible (2) à être surveillée et un signe de l'anomalie,
dans lequel le programme de génération de modèle de détection de signe d'anomalie lisible par ordinateur permet à le ou les ordinateurs (5) d'effectuer :
un traitement d'acquisition consistant à acquérir une pluralité de valeurs de traitement réelles générées dans l'installation cible ;
un traitement de sélection consistant à sélectionner au moins une valeur de traitement de référence en tant qu'une référence de correction parmi la pluralité de valeurs de traitement réelles, dans lequel la valeur de traitement de référence à être sélectionnée présente des corrélations avec une ou plusieurs autres valeurs de traitement réelles, la sélection étant basée sur le nombre de corrélations ;
un traitement de calcul consistant à calculer un coefficient de nécessité de correction de détermination à partir d'au moins une valeur de traitement réelle incluse dans la pluralité de valeurs de traitement réelles et de la au moins une valeur de traitement de référence, le coefficient de nécessité de correction de détermination étant pour déterminer si la au moins une valeur de traitement réelle présente ou non une corrélation avec la au moins une valeur de traitement de référence ;
un autre traitement de calcul consistant à calculer une valeur de correction pour corriger la au moins une valeur de traitement réelle à l'aide de la au moins une valeur de traitement réelle et de la au moins une valeur de traitement de référence ;
un traitement de détermination consistant à déterminer si chacune de la pluralité de valeurs de traitement réelles est corrélée ou non avec la au moins une valeur de traitement de référence, sur la base du coefficient de nécessité de correction de détermination ; le programme de génération de modèle de détection de signe d'anomalie lisible par ordinateur étant **caractérisé en ce qu'**il permet à le ou les ordinateurs (5) d'effectuer :
un traitement de correction consistant à utiliser la valeur de correction pour corriger au moins une valeur de traitement réelle déterminée comme étant corrélée avec la au moins une valeur de traitement de référence parmi la pluralité de valeurs de traitement réelles sur la base du coefficient de nécessité de correction de détermination ;
un traitement de génération consistant à générer des données d'entrée d'apprentissage comprenant au moins une valeur de traitement corrigée en tant que la au moins une valeur de traitement réelle corrigée par la valeur de correction ; et
un traitement d'apprentissage automatique consistant à effectuer l'apprentissage automatique en entrant les données d'entrée d'apprentissage dans le modèle de détection de signe d'anomalie.
